# EUROPEAN PATENT APPLICATION

(11) **EP 4 686 333 A1**
(43) Date of publication of application: **28.01.2026**
(21) Application number: 24774661.3
(22) Date of filing: 05.03.2024
(51) Int. Cl.: H05K 9/00, B29C 45/00, H01F 1/11, H01F 1/34, H01F 1/37, H01F 1/113

(54) **PELLET MIXTURE, RADIO WAVE ABSORBER, RADIO WAVE ABSORBING ARTICLE, AND METHOD FOR MANUFACTURING RADIO WAVE ABSORBER**

(30) Priority: 23.03.2023 JP 2023046125
(71) Applicant: FUJIFILM Corporation, Tokyo 106-8620 (JP)
(72) Inventor: HASHIMOTO Hirokazu, Minamiashigara-shi, Kanagawa 250-0193 (JP); HATAKEYAMA Koichi, Minamiashigara-shi, Kanagawa 250-0193 (JP)
(74) Representative: Klunker IP Patentanwälte PartG mbB
(86) International application number: PCT/JP2024/008283
(87) International publication number: WO 2024/195518

(57) **Abstract**

There are provided a pellet mixture including: a pellet 0 which is a pellet of a composition containing at least a resin, and a pellet 1 which is a pellet of a composition containing one or more kinds of particles selected from the group consisting of magnetic particles and dielectric particles, and a resin, in which a volume content of the particles is higher than a volume content of the particles in the composition of the pellet 0, in which a friction coefficient of the composition of the pellet 0 with a metal is defined as µ0, a friction coefficient of the composition of the pellet 1 with the metal is defined as µ1, and a friction coefficient ratio (µ0/µ1) is 0.80 or less; a radio wave absorber which is a molded product obtained by molding the pellet mixture; a radio wave absorbing article which contains the radio wave absorber; and a method for producing a radio wave absorber, the method including molding the pellet mixture into a molded product.

## Description

### Technical Field

The present invention relates to a pellet mixture, a radio wave absorber, a radio wave absorbing article, and a method for producing a radio wave absorber.

### Background Art

The radio wave absorber can be incorporated into various articles as a molded product obtained by molding a composition containing a radio wave absorbing material (see, for example,PTL1).

### Citation List

### Patent Literature

PTL 1: WO2020/044649A1

### Summary of the invention

### Technical Problem

In recent years, as an electronic device that uses radio waves, a radar for recognizing an object by transmitting and receiving radio waves has attracted attention. For example, an on-vehicle radar transmits radio waves and receives radio waves which are the transmitted radio waves reflected by an object (such as a pedestrian, a vehicle, or the like), whereby it can recognize the presence of the object, the distance from the object, or the like. In order to prevent collision with an object, as necessary, an automatic driving control system of an automobile can automatically brake and stop the automobile or can automatically control the speed to keep the distance to the object based on the results obtained by the radar recognizing the object.

In order to improve the reliability of the system that carries out various controls based on the results obtained by the radar recognizing the object as described above, it is desired to improve the performance of the radar. For this reason, in recent years, it has begun to be examined to install a radio wave absorber on the front side (an incident side of the radio wave incident from the outside) of the radio wave transmitting and receiving unit of the radar to improve the recognition accuracy.

The present inventors, in the course of conducting investigations to improve the performance of a radio wave absorber, have considered that in a case where a radio wave absorber exhibiting stable radio wave absorbability can be mass-produced (that is, in a case where a radio wave absorber having a small variation in radio wave absorbability can be mass-produced) in a case of mass-producing a molded product obtained by molding a composition containing a radio wave absorbing material, the usefulness of the radio wave absorber can be further enhanced.

An object of one aspect of the present invention is to enable mass production of a radio wave absorber exhibiting stable radio wave absorbability.

### Solution to Problem

An aspect of the present invention is as follows.
[1] A pellet mixture comprising:
   a pellet 0 which is a pellet of a composition containing at least a resin; and
   a pellet 1 which is a pellet of a composition containing one or more kinds of particles selected from the group consisting of magnetic particles and dielectric particles, and a resin, in which a volume content of the particles is higher than a volume content of the particles in the composition of the pellet 0,
   in which a friction coefficient of the composition of the pellet 0 with a metal is defined as µ0, a friction coefficient of the composition of the pellet 1 with the metal is defined as µ1, and a friction coefficient ratio (µ0/µ1) is 0.80 or less.
[2] The pellet mixture according to [1],
   in which the friction coefficient ratio (µ0/µ1) is 0.50 or more and 0.80 or less.
[3] The pellet mixture according to [1] or [2],
   in which the particles are magnetic particles, and
   the magnetic particles are particles of a hexagonal ferrite.
[4] The pellet mixture according to [3],
   in which the hexagonal ferrite is a substitution-type hexagonal ferrite.
[5] The pellet mixture according to [4],
   in which the substitution-type hexagonal ferrite is a magnetoplumbite-type hexagonal ferrite having a formulation represented by Formula 1,
   in Formula 1, A represents one or more kinds of atoms selected from the group consisting of Sr, Ba, Ca, and Pb, and x satisfies 0.50 ≤ x ≤ 8.00.

      FORMULA 1 AFe₍₁₂₋ₓ₎AlₓO₁₉
[6] The pellet mixture according to [5],
   in which an atom represented by A in Formula 1 includes Sr.
[7] The pellet mixture according to any one of [1] to [6],
   in which the friction coefficient ratio (µ0/µ1) is 0.50 or more and 0.80 or less,
   the magnetic particles are particles of a hexagonal ferrite,
   the hexagonal ferrite is a substitution-type hexagonal ferrite, and
   the substitution-type hexagonal ferrite is a magnetoplumbite-type hexagonal ferrite having a formulation represented by Formula 1,
   in Formula 1, A represents one or more kinds of atoms selected from the group consisting of Sr, Ba, Ca, and Pb, an atom represented by A includes Sr, and x satisfies 0.50 ≤ x ≤ 8.00.

      FORMULA 1 AFe₍₁₂₋ₓ₎AlₓO₁₉
[8] A radio wave absorber which is a molded product obtained by molding the pellet mixture according to any one of [1] to [7].
[9] A radio wave absorbing article comprising:
   the radio wave absorber according to [8].
[10] A method for producing a radio wave absorber, comprising:
   molding of the pellet mixture according to any one of [1] to [7] into a molded product.
[11] The method for producing a radio wave absorber according to [10],
   in which the molding is injection molding.

### Effects of Invention

According to one aspect of the present invention, it is possible to provide a pellet mixture that can contribute to enabling mass production of a radio wave absorber exhibiting stable radio wave absorbability. In addition, according to one aspect of the present invention, it is possible to provide a radio wave absorber which is a molded product obtained by molding the pellet mixture, a radio wave absorbing article including the radio wave absorber, and a method for producing a radio wave absorber, the method including molding the pellet mixture into a molded product.

### Brief description of the drawings

Fig. 1 is an explanatory view of a method for measuring a friction coefficient.
Fig. 2 is a schematic configuration diagram of an injection molding machine.
Fig. 3 is a schematic view of a pellet supply unit of an injection molding machine used for producing an injection molded product in Examples and Comparative Examples.

### Description of embodiments

In the present invention and the present specification, the term "radio wave" means an electromagnetic wave having a frequency of 3 terahertz (THz) or less. The "radio wave absorber" has radio wave absorbability with respect to radio waves of one or more frequencies.

### [Pellet mixture]

One aspect of the present invention relates to a pellet mixture including a pellet 0 which is a pellet of a composition containing at least a resin, and a pellet 1 which is a pellet of a composition containing one or more kinds of particles selected from the group consisting of magnetic particles and dielectric particles, and a resin, in which a volume content of the particles is higher than a volume content of the particles in the composition of the pellet 0. For the pellet mixture, a friction coefficient of the pellet 0 with the metal of the composition is denoted by µ0, a friction coefficient of the pellet 1 with the metal of the composition is denoted by µ1, and a friction coefficient ratio (µ0/µ1) is 0.80 or less.

In the present invention and the present specification, the term "pellet" refers to a granular material of a composition containing a resin. The shape of the granular material is not particularly limited, and can be any shape such as a spherical shape, a substantially spherical shape, a cylindrical shape, a substantially cylindrical shape, a rectangular parallelepiped shape, a substantially rectangular parallelepiped shape, or a flake shape. Each of "pellet 0" and "pellet 1" is a collection of granular materials of a composition containing a resin. The "aggregate" is not limited to a form in which the granular material constituting the aggregate is in direct contact with the pellet mixture.

Hereinafter, the composition of the pellet 0 and the composition of the pellet 1 will be collectively referred to as a composition.

The "pellet 0" contained in the pellet mixture is a pellet of a composition containing at least a resin, and the "pellet 1" is a pellet of a composition containing one or more kinds of particles selected from the group consisting of magnetic particles and dielectric particles, and a resin, in which a volume content of the particles is higher than a volume content of the particles in the composition of the pellet 0. The higher the volume content of the particles, the higher the specific gravity of the pellet can be. In a case where two types of pellets having different specific gravities are mixed and introduced into a molding machine, the high specific gravity pellet tends to be supplied to the molding portion of the molding machine more quickly in a case where no countermeasures are taken. The present inventors consider that a large deviation in the timing at which the two types of pellets having different specific gravities are supplied to the molding portion of the molding machine may cause variation in the radio wave absorbability of a plurality of radio wave absorbers mass-produced by molding.

On the other hand, the present inventors have considered that the pellet receives a larger resistance in the molding machine as the friction coefficient with respect to the metal is higher, and thus the supply rate of the pellet to the molding portion is slower. In other words, it is considered that the smaller the friction coefficient with respect to the metal, the smaller the resistance received by the pellet in the molding machine, and thus the faster the supply rate of the pellet to the molding portion. As a result of further intensive studies, the present inventors have newly found that, in a pellet mixture containing a pellet 0 and a pellet 1 where a combination in which a friction coefficient of a composition of the pellet 0 with a metal is µ0 and a friction coefficient of a composition of the pellet 1 with a metal is µ1, and a friction coefficient ratio (µ0/µ1) is 0.80 or less, a plurality of radio wave absorbers produced by molding this pellet mixture can exhibit stable radio wave absorbability. It is presumed that this is because, in the pellet mixture including the pellet 0 and the pellet 1 of the combination in which the friction coefficient ratio (µ0/µ1) is 0.80 or less, the timing of the supply to the molding portion in the molding machine can be suppressed from being largely deviated between the pellet 0 and the pellet 1. Note that the present invention is not limited to the supposition described in the present specification.

Hereinafter, the pellet mixture will be described in more detail.

### <Friction coefficients µ0 and µ1>

In the present invention and the present specification, the friction coefficients µ0 and µ1 are values obtained by the following method.

The pellet 0 and the pellet 1 are taken out from the pellet mixture. The extraction of each pellet from the pellet mixture can be carried out by a known separation method such as a method for utilizing a difference in specific gravity. Alternatively, pellets for measuring a friction coefficient may be collected from the same lot as the lot of each pellet used in the production of the pellet mixture.

A flat plate having a size of 80 mm × 60 mm and a thickness of 1 mm is produced as a friction coefficient measurement sample. Five friction coefficient measurement samples are produced for each of the pellet 0 and the pellet 1. A method for preparing the flat plate is not particularly limited. For example, a flat plate can be produced by a molding method that is generally used for producing a flat plate, such as injection molding, extrusion molding, or compression molding. In the measurement of the friction coefficient described below, the surface in contact with the counterpart material and the surface in contact with the sliding piece are visually confirmed to be surfaces without significant burrs and significant warping. Further, in the measurement of the friction coefficient, the arithmetic mean roughness Ra of the surface in contact with the counterpart material is set to 3.0 µm or less. As a method for measuring Ra, a method described in the section of Examples described later can be adopted.

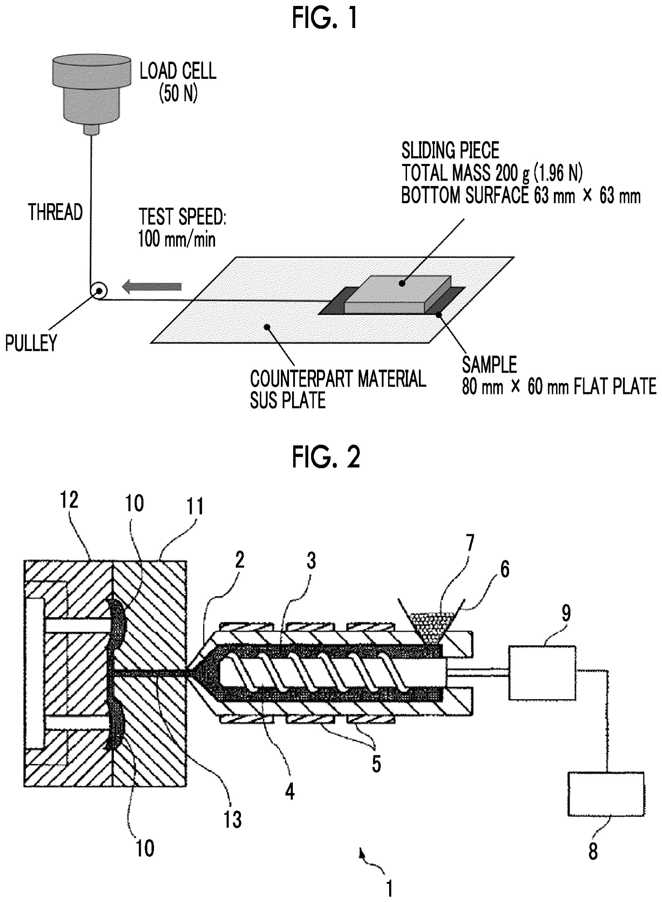

Fig. 1 is an explanatory view of a method for measuring a friction coefficient. The friction coefficient is measured in a measurement environment in which the atmosphere temperature is 23°C and the relative humidity is 50%. As the counterpart material, a steel use stainles (SUS) plate is used. A sample and a sliding piece are disposed on a counterpart material as shown in Fig. 1. The size of the bottom surface of the sliding piece in contact with the sample surface may be 63 mm × 63 mm, and the total mass of the sliding piece may be 200 g (1.96 N). In order to apply a uniform pressure distribution to the sample, the bottom surface of the sliding piece in contact with the sample surface is coated with an elastic material. The total mass of the sliding pieces is a mass including the mass of the material covering the bottom surface. Examples of the elastic material can include felt and foam rubber, and in the measurement of the friction coefficient described in the section of Examples described later, a sliding piece having a bottom surface coated with foam rubber was used. A load cell capacity is 50 N (Newton), a test speed is 100 mm/min (minute), and a static friction coefficient is adopted as a friction coefficient. In this way, the friction coefficient of each of the five samples is measured for each of the pellet 0 and the pellet 1. For each of the pellet 0 and the pellet 1, the arithmetic mean of the values of the friction coefficients of the five samples is defined as the friction coefficients µ0 and µ1 of the composition of each pellet with respect to the metal. The reason why the SUS plate is employed as the counterpart material is that SUS is exemplified as a representative example of a metal constituting the inside of the molding machine, and the molding machine used for molding the molded product using the pellet mixture is not limited to the one having the inside made of SUS.

In the pellet mixture, from the viewpoint of enabling mass production of a radio wave absorber exhibiting stable radio wave absorbability, the friction coefficient ratio (µ0/µ1) is 0.80 or less, preferably 0.78 or less, and more preferably 0.76 or less, 0.75 or less, 0.74 or less, 0.72 or less, 0.70 or less, 0.68 or less, 0.66 or less, and 0.64 or less in this order. The friction coefficient ratio (µ0/µ1) can be, for example, 0.50 or more, 0.52 or more, or 0.54 or more.

For example, the friction coefficient µ0 can be 0.30 or more and 0.50 or less, and the friction coefficient µ1 can be 0.40 or more and 0.70 or less. However, the friction coefficient ratio (µ0/µ1) may be 0.80 or less, and the friction coefficient µ0 and the friction coefficient µ1 are not limited to the above range. The friction coefficient of each pellet can be adjusted by, for example, the type of resin contained in the pellet, the mixing ratio of a plurality of resins in a case where the pellet contains a plurality of resins, the addition of a slip agent, and the like.

The pellet 0 is a pellet of a composition containing at least a resin, and in one form, the pellet 0 does not contain one or more kinds of particles selected from the group consisting of magnetic particles and dielectric particles, and in another form, the pellet 0 contains one or more kinds of particles selected from the group consisting of magnetic particles and dielectric particles.

On the other hand, the pellet 1 is a pellet of a composition containing one or more kinds of particles selected from the group consisting of magnetic particles and dielectric particles, and a resin, and a volume content of the particles in the composition of the pellet 1 is higher than a volume content of the particles in the composition of the pellet 0.

### <Particle>

The particles are one or more kinds of particles selected from the group consisting of magnetic particles and dielectric particles. Each of the composition of the pellet 0 and the composition of the pellet 1 can also contain different types of particles at any ratio as particles selected from the group consisting of magnetic particles and dielectric particles. The same applies to a radio wave absorber described later. In the present invention and the present specification, "magnetic" means ferromagnetic property, and "dielectric" means a substance having a volume resistivity (ρᵥ) at 20°C, which is an intrinsic value of the substance, of 1 × 10⁵ Ω·m or more.

### (Dielectric particles)

As the dielectric particles that can be contained in the composition, particles of various dielectrics can be used. For example, carbon-based particles can be used as the dielectric particles. Here, the term "based" is used to mean "include". Examples of the carbon-based particles can include particles of various carbon-based materials such as carbon black and graphite.

### (Magnetic particle)

Examples of the magnetic particles that can be contained in the composition include particles of various magnetic materials such as ferrite, iron oxide, cobalt, and chromium oxide. From the viewpoint of radio wave absorbability, as the magnetic particles, particles of a hexagonal ferrite are preferable. A type of the magnetic material constituting the magnetic particles can be confirmed by performing analysis by an X-ray diffraction method. For example, a powder of magnetic particles can be taken out from a composition containing magnetic particles or a radio wave absorber containing magnetic particles by a known method, and the taken-out powder can be analyzed by an X-ray diffraction method. Alternatively, a part of the powder can be collected from the powder of the magnetic particles used for preparing the composition, and the collected powder can be analyzed by an X-ray diffraction method. Alternatively, it can be checked by, for example, the following method. A part or all of the radio wave absorber is finely chopped, immersed in a solvent (for example, hexafluoroisopropanol) for 1 or 2 days, and then dried. The dried radio wave absorber is further ground finely and subjected to analysis according to the X-ray diffraction method.

### Particles of hexagonal ferrite

In the present invention and the present specification, the term "particles of a hexagonal ferrite" refers to magnetic particles in which a crystal structure of a hexagonal ferrite is detected as the main phase by analysis according to the X-ray diffraction method. The main phase refers to a structure to which the highest intensity diffraction peak attributes in the X-ray diffraction spectrum are obtained according to the X-ray diffraction method. For example, in a case where the highest intensity diffraction peak is attributed to a hexagonal ferrite crystal structure in an X-ray diffraction spectrum obtained by the X-ray diffraction method, it is determined that the hexagonal ferrite crystal structure is detected as the main phase. In a case where only a single structure is detected according to the X-ray diffraction method, this detected structure is used as the main phase. The hexagonal ferrite crystal structure includes at least an iron atom, a divalent metal atom, and an oxygen atom, as a constituent atom. In the unsubstitution-type hexagonal ferrite, the atoms that constitute the crystal structure of the hexagonal ferrite are only the iron atom, the divalent metal atom, and the oxygen atom. On the other hand, the substitution-type hexagonal ferrite contains one or more kinds of other atoms together with the iron atom, the divalent metal atom, and the oxygen atom, as atoms that constitute the crystal structure of the hexagonal ferrite. These one or more kinds of other atoms are generally atoms that are substituted for a part of iron in the crystal structure of hexagonal ferrite. The divalent metal atom is a metal atom that is capable of being a divalent cation, as an ion, and examples thereof include an alkaline earth metal atom such as a strontium atom, a barium atom, a calcium atom, and a lead atom. In the present invention and the present specification, the hexagonal strontium ferrite particle means one in which the main divalent metal atom contained in this particle is a strontium atom, and the hexagonal barium ferrite particle means one in which the main divalent metal atom contained in this particle is a barium atom. The same applies to particles of other types of hexagonal ferrite. The main divalent metal atom means a divalent metal atom that occupies the largest amount among the divalent metal atoms contained in this particle in terms of % by atom. However, rare earth atoms shall not be included in the above divalent metal atoms. The term "rare earth atom" in the present invention and the present specification is selected from the group consisting of a scandium atom (Sc), a yttrium atom (Y), and a lanthanoid atom. The lanthanoid atom is selected from the group consisting of a lanthanum atom (La), a cerium atom (Ce), a praseodymium atom (Pr), a neodymium atom(Nd), a promethium atom (Pm), a samarium atom (Sm), a europium atom (Eu), a gadolinium atom (Gd), a terbium atom (Tb), a dysprosium atom (Dy), a holmium atom (Ho), an erbium atom (Er), a thulium atom (Tm), a ytterbium atom (Yb), and a lutetium atom (Lu).

Regarding the particles of the hexagonal ferrite, the hexagonal ferrite that constitutes the particle includes one or more kinds of hexagonal ferrites selected from the group consisting of hexagonal strontium ferrite, hexagonal barium ferrite, hexagonal calcium ferrite, and hexagonal lead ferrite. From the viewpoint of the radio wave absorbability in the high frequency band, it is preferably one or more kinds of hexagonal ferrites selected from the group consisting of hexagonal strontium ferrite, hexagonal barium ferrite, and hexagonal calcium ferrite, more preferably hexagonal strontium ferrite and/or hexagonal barium ferrite, and still more preferably hexagonal strontium ferrite.

In one form, the particles of the hexagonal ferrite can be particles of a magnetoplumbite-type (generally referred to as "M-type") hexagonal ferrite. The magnetoplumbite-type hexagonal ferrite has a formulation represented by a composition formula: AFe₁₂O₁₉ in a case of being an unsubstitution-type which does not contain an atom that substitutes iron. Here, A can represent one or more kinds of atoms selected from the group consisting of Sr, Ba, Ca, and Pb, and also includes a form in which two or more of these atoms are contained in any ratio.

The hexagonal ferrite that is preferable from the viewpoint of radio wave absorbability includes, for example, a substitution-type hexagonal ferrite. Specific examples of the substitution-type hexagonal ferrite include a substitution-type magnetoplumbite-type hexagonal ferrite in which a part of iron atoms of the magnetoplumbite-type hexagonal ferrite are substituted with an aluminum atom. As one form of such hexagonal ferrite, hexagonal ferrite having a formulation represented by Formula 1 can be mentioned.

FORMULA 1 AFe₍₁₂₋ₓ₎AlₓO₁₉

In Formula 1, A represents one or more kinds of atoms (hereinafter, also referred to as an "A atom") selected from the group consisting of Sr, Ba, Ca, and Pb, it may be only one kind of atom, it may contain two or more kinds of atoms in any ratio, and, from the viewpoint of improving the uniformity of the formulation between particles contained in the radio wave absorber, it is preferably only one kind of atom.

From the viewpoint of the radio wave absorbability in the high frequency band, A in Formula 1 is preferably one or more kinds of atoms selected from the group consisting of Sr, Ba, and Ca, and more preferably one or more kinds of atoms selected from the group consisting of Sr and Ba. It is still more preferable that Sr is contained, and it is even still more preferable that A is Sr.

In Formula 1, x satisfies 0.50 ≤ x ≤ 8.00.

In one form, x can satisfy 1.50 ≤ x ≤ 8.00. From the viewpoint of the radio wave absorbability in the high frequency band, x is preferably 1.50 or more, more preferably more than 1.50, still more preferably 2.00 or more, and even still more preferably more than 2.00. In addition, from the viewpoint of magnetic properties, x is 8.00 or less, preferably less than 8.00, more preferably 6.00 or less, and still more preferably less than 6.00.

Specific examples of the form which is the substitution-type hexagonal ferrite represented by Formula 1 belonging to a magnetoplumbite type and in which x satisfies 1.50 ≤ x ≤ 8.00 include SrFe_{(9.58)}Al_{(2.42)}O₁₉, SrFe_{(9.37)}Al_{(2.63)}O₁₉, SrFe_{(9.27)}Al_{(2.73)}O₁₉, SrFe_{(9.85)}Al_{(2.15)}O₁₉, SrFe_{(10.00)}Al_{(2.00)}O₁₉, SrFe_{(9.74)}Al_{(2.26)}O₁₉, SrFe_{(10.44)}Al_{(1.56)}O₁₉, SrFe_{(9.79)}Al_{(2.21)}O₁₉, SrFe_{(9.33)}Al_{(2.67)}O₁₉, SrFe_{(7.88)}Al_{(4.12)}O₁₉, SrFe_{(7.04)}Al_{(4.96)}O₁₉, SrFe_{(7.37)}Al_{(4.63)}O₁₉, SrFe_{(6.25)}Al_{(5.75)}O₁₉, SrFe_{(7.71)}Al_{(4.29)}O₁₉, Sr_{(0.80)}Ba_{(0.10)}Ca_{(0.10)}Fe_{(9.83)}Al_{(2.17)}O₁₉, BaFe_{(9.50)}Al_{(2.50)}O₁₉, CaFe_{(10.00)}Al_{(2.00)}O₁₉, and PbFe_{(9.00)}Al_{(3.00)}O₁₉. In addition, specific examples thereof also include the substitution-type hexagonal strontium ferrite described in the section of Examples described later. The formulation of the magnetic particle can be confirmed, for example, by subjecting a dissolution solution in which the magnetic particle is dissolved, to a high frequency inductively coupled plasma emission spectroscopic analysis. Specific examples of the checking method include a method described in the section of Examples described later. Alternatively, after exposing a cross-section by cutting the radio wave absorber or the like, the exposed cross-section is subjected to, for example, energy dispersive X-ray analysis, whereby the formulation of the magnetic particle contained in the radio wave absorber can be checked.

In addition, in one form, x can satisfy 0.50 ≤ x < 1.50. For example, from the viewpoint of the radio wave absorbability in a high frequency band in a range of 35.0 GHz to 66.0 GHz, preferably 45.0 GHz to 66.0 GHz, and more preferably 55.0 GHz to 66.0 GHz, x can be set to 0.50 or more, and x is preferably more than 0.80. In addition, from the viewpoint of magnetic properties, x is preferably less than 1.50 and more preferably 1.20 or less.

In one form, in the substitution-type hexagonal ferrite, the crystal phase can be a single phase, and a plurality of crystal phases can be included. It is preferable that the crystal phase is a single phase, and it is more preferable that the hexagonal ferrite is a substitution-type hexagonal ferrite of which the substitution type is a magnetoplumbite type in which the crystal phase is a single phase.

The case where the "crystal phase is a single phase" refers to a case where only one kind of diffraction pattern showing any crystal structure is observed in analysis carried out according to the X-ray diffraction method. The analysis according to the X-ray diffraction method can be carried out, for example, according to the method described in the section of Examples described later. In a case where a plurality of crystal phases are included, two or more kinds of diffraction patterns showing any crystal structure are observed in the analysis according to the X-ray diffraction method. Regarding the attribution of the diffraction pattern, for example, a database of the International Centre for Diffraction Data (ICDD, registered trade name) can be referenced. For example, regarding the diffraction pattern of the magnetoplumbite-type hexagonal ferrite containing Sr, "00-033-1340" of the International Centre for Diffraction Data (ICDD) can be referred to. However, in a case where a part of iron atoms are substituted with a substituent atom such as an aluminum atom, the peak position shifts from the peak position in a case where the substituent atom is not included.

### Method for producing particles of hexagonal ferrite

There are various methods as a method for producing particles of the hexagonal ferrite, and in a case where the composition contains particles of the hexagonal ferrite, the method for producing particles of the hexagonal ferrite is not particularly limited. Hereinafter, a solid phase method will be described as an example of the method for producing particles of a hexagonal ferrite. The solid phase method is a method for producing particles of a hexagonal ferrite by sintering a mixture obtained by mixing a plurality of solid raw materials.

Examples of the solid raw material that is used in the solid phase method include a compound of an iron atom and a compound of an A atom, and further include a compound of a substituent atom in a case of producing a powder of a substitution-type hexagonal ferrite. These compounds can be an oxide, a carbonate, or the like. The A atom and the substituent atom are as described above. The mixing ratio between a plurality of solid raw materials may be determined according to the desired hexagonal ferrite formulation. A raw material mixture can be obtained by mixing a plurality of solid raw materials at the same time or sequentially mixing them in any order. In addition, the mixing of solid raw materials is not limited to being carried out under dry conditions. Under wet conditions, for example, a solvent such as water may be added, and mixing may be carried out in a slurry state. The mixing of the solid raw materials can be carried out by a commercially available mixing device or a mixing device having a publicly known configuration. An example of the mixing device is a paint shaker. As the mixing conditions are reinforced, the value of the inclination of the peak frequency with respect to the temperature described above tends to decrease. An example of a means for reinforcing the mixing conditions is the use of dispersion media such as dispersion beads. The above mixing can be carried out, for example, in an ambient air atmosphere at room temperature.

After the above mixing, the obtained raw material mixture can be sintered. In this sintering, the crystallization of the raw material mixture can be promoted, whereby the crystal structure of the hexagonal ferrite can be formed. Regarding the sintering conditions, the sintering temperature can be set, for example, in a range of 1,000°C to 1,500°C. The sintering temperature can be, for example, the atmosphere temperature inside the device in which sintering is carried out (for example, the temperature inside the heating furnace). The sintering time can be in a range of 1 hour to 6 hours. However, the ranges are described as examples, and the sintering may be carried out under conditions under which the crystal structure of the hexagonal ferrite is capable of being formed. The sintering can be carried out, for example, in an ambient air atmosphere.

In the sintering, it is also possible to add a fusing agent to the powder of the raw material mixture and sinter it. As the fusing agent, various fusing agents can be used, and examples thereof include SrCl₂, SrCl₂·6H₂O, CaCl₂·2H₂O, MgCl₂, KCl, NaCl, BaCl₂·2H₂O, and Na₂B₄O₇. The adding amount thereof is, for example, preferably 0.1 to 10 parts by mass and more preferably 0.1 to 8.0 parts by mass with respect to 100 parts by mass of the powder of the raw material mixture.

The raw material mixture before sintering can be subjected to a dry-type or wet-type pulverization step, and/or the sintered product after the sintering can be subjected to a dry-type or wet-type pulverization step. In a case of carrying out the pulverization step, it is possible to adjust the size of the particles that constitute the powder of the hexagonal ferrite. The pulverization can be carried out with a publicly known pulverizing unit such as a mortar and pestle or a pulverizer (a cutter mill, a ball mill, a bead mill, a roller mill, a jet mill, a hammer mill, an attritor, or the like). As the pulverization conditions are reinforced, the value of the inclination of the peak frequency with respect to the temperature described above tends to increase.

The sintered product obtained after the sintering can be subjected to a step such as pulverization, as necessary, and then subjected to an annealing treatment. In a case where the annealing treatment is carried out, the value of the inclination of the peak frequency with respect to the temperature described above tends to decrease. The annealing treatment can be carried out, for example, in a heating furnace having a furnace temperature of 500°C to 1,100°C for about 1 to 10 hours.

One or more publicly known steps such as washing and drying can be optionally carried out before and/or after the various steps described above.

### Volume content

The radio wave absorber obtained by molding the above-described composition and the above-described pellet mixture contains the above-described particles and resin. In the composition and the radio wave absorber, the volume content of the particles is not particularly limited. The volume content refers to the total volume of the composition (however, in a case where a solvent is contained, the solvent is not included, the same applies hereinafter) or a volume-based content in which the total volume of the radio wave absorber is set to 100% by volume.

In one form, the volume content of the particles in the radio wave absorber can be 35% by volume or less, and can be, for example, in a range of 15% to 35% by volume. In addition, in another form, the volume content of the particles in the radio wave absorber can also be 35% by volume or more. In this case, the volume content can be, for example, in a range of 35% to 60% by volume, and it can also be in a range of 35% to 50% by volume.

The pellet 1 is a pellet of a composition containing one or more kinds of particles selected from the group consisting of magnetic particles and dielectric particles, and a resin, in which a volume content of the particles is higher than a volume content of the particles in the composition of the pellet 0. In one form, the volume content of the particles in the composition of the pellet 1 can be 35% by volume or less, and can be, for example, in a range of 15% to 35% by volume. In addition, in another form, the volume content of the particles in the composition of the pellet 1 can be 35% by volume or more. In this case, the volume content can be, for example, in a range of 35% to 60% by volume, and it can also be in a range of 35% to 50% by volume.

The pellet 0 is a pellet of a composition containing at least a resin, and in one form, the pellet 0 does not contain one or more kinds of particles selected from the group consisting of magnetic particles and dielectric particles, and in another form, the pellet 0 contains one or more kinds of particles selected from the group consisting of magnetic particles and dielectric particles. The volume content of the particles in the composition of the pellet 0 is 0% by volume or more, and can be 0% by volume or more or more than 0% by volume. The volume content of the particles in the composition of the pellet 0 can be, for example, less than 35% by volume, 30% by volume or less, 25% by volume or less, 20% by volume or less, 15% by volume or less, 10% by volume or less, 5% by volume or less, or 1% by volume or less.

In the composition, the volume content of the particles can be obtained from formulation of the composition. Regarding the radio wave absorber, for example, the volume content of the particles can be determined by collecting the particles from the radio wave absorber by a known method and calculating "(volume of collected particles/total volume of radio wave absorber) × 100". Here, the total volume of the radio wave absorber and the volume of the particles can be obtained by a known method. Alternatively, in a case where the formulation of the composition used for preparing a radio wave absorber is known, the volume content of the particles in the radio wave absorber can be determined from this known formulation.

In addition, the volume content of the particles in the radio wave absorber can also be determined by the following method using a cross-section SEM image acquired by a scanning electron microscope (SEM).

A measurement sample having a square plane, one side of which has a length of 5 mm, is cut out from a randomly determined position of the radio wave absorber to be measured. A sample for cross-section observation is prepared from the cut-out sample. The sample for cross-section observation is prepared by focused ion beam (FIB) processing. The prepared cross-section observation sample is observed by SEM, and a cross-sectional image (cross-sectional SEM image) is captured. As the SEM, a field emission (FE) scanning electron microscope (FE-SEM) is used. Using the FE-SEM, a cross-section observation sample is set on a stage so that the FIB-processed cross-section faces upward, and a cross-section SEM image with a visual field of 30 µm × 40 µm is obtained under the conditions of an acceleration voltage of 15 kV and an observation magnification of 3000 folds. The obtained cross-section SEM image is subjected to binarization processing, and the proportion (in terms of the area) of the particles is calculated.

The above operation is carried out on five measurement samples cut out from different positions of the radio wave absorber to be measured, and the volume content of the particles can be determined as the arithmetic mean of the obtained five values. It is noted that, as necessary, the elemental analysis of the cross-section observation sample can be carried out and the portion of the particles in the cross-section SEM image can also be specified.

The volume filling rate of the other components described in the present specification can also be determined in the same manner as described above.

The specific gravity of the pellet 1 and the pellet 0 is not particularly limited.

The specific gravity of the pellet 1 can be, for example, 1.5 or more and 3.0 or less.

The specific gravity of the pellet 0 can be, for example, 0.5 or more and less than 1.5.

In addition, the difference between the specific gravity of the pellet 1 and the specific gravity of the pellet 0 (specific gravity of pellet 1 - specific gravity of pellet 0) can be, for example, 0.5 or more and 2.0 or less or 0.5 or more and 1.5 or less.

In the present invention and the present specification, the "specific gravity" is measured by a water displacement method described in JIS K 7112-1: 2023.

### <Resin>

In the present invention and the present specification, the term "resin" is synonymous with a polymer, and the polymer includes a homopolymer and a copolymer. The resin can function as a binder in the above-described composition and radio wave absorber.

Examples of the resin include a thermoplastic resin and a thermosetting resin.

Examples of the thermoplastic resin include an acrylic resin, polyacetal, polyamide, polyethylene, polypropylene, polyethylene terephthalate, polybutylene terephthalate, a polyethylene terephthalate-1,4-cyclohexanedimethanol terephthalate copolymer, polylactic acid, polycarbonate, polystyrene, polyphenylene sulfide, polyvinyl chloride, an acrylonitrile butadiene styrene (ABS) resin obtained by copolymerization of acrylonitrile, butadiene, and styrene; and an acrylonitrile styrene (AS) resin obtained by copolymerization of acrylonitrile and styrene.

Examples of the thermosetting resin include a phenol resin, an epoxy resin, a melamine resin, a urea resin, an unsaturated polyester, a diallyl phthalate resin, a urethane resin, and a silicon resin.

In the present invention and the present specification, the "resin" also includes rubber and an elastomer.

From viewpoints that the mixability with the magnetic particles is good and the radio wave absorber having more excellent durability, weather fastness, and impact resistance can be manufactured, examples of the rubber include butadiene rubber, isoprene rubber, chloroprene rubber, halogenated butyl rubber, fluororubber, urethane rubber, acrylic rubber (abbreviation: ACM) obtained by copolymerization of an acrylic acid ester (for example, ethyl acrylate, butyl acrylate, or 2-ethylhexyl acrylate) and another monomer, ethylene-propylene rubber obtained by coordination polymerization of ethylene and propylene using a Ziegler catalyst, butyl rubber (abbreviation: IIR) obtained by copolymerization of isobutylene and isoprene, styrene butadiene rubber (abbreviation: SBR) obtained by copolymerization of butadiene and styrene, acrylonitrile butadiene rubber (abbreviation: NBR) obtained by copolymerization of acrylonitrile and butadiene, and silicone rubber.

In a case of manufacturing a radio wave absorber including rubber, the composition may include various additives such as a vulcanizing agent, a vulcanization aid, a softening agent, and a plasticizer, in addition to the rubber. Examples of the vulcanizing agent include sulfur, an organic sulfur compound, and a metal oxide.

Examples of the resin include a thermoplastic elastomer (TPE). Examples of the thermoplastic elastomer include an olefin-based thermoplastic elastomer (a thermoplastic olefinic elastomer (TPO)), a styrene-based thermoplastic elastomer (a thermoplastic styrenic elastomer (TPS)), an amide-based thermoplastic elastomer (a thermoplastic polyamide elastomer (TPA), and a polyester-based thermoplastic elastomer (a thermoplastic copolyester (TPC)).

The radio wave absorber obtained by molding the composition and the pellet mixture may contain only one kind of resin or may contain two or more kinds of resins.

The volume content of the resin in the composition of the pellet 0 is not particularly limited, and for example, it can be 65% by volume or more and 100% by volume or less.

The volume content of the resin in the composition of the pellet 1 and the radio wave absorber is also not particularly limited, and it can be, for example, 65% by volume or more, and it can be 65% by volume or more and 92% by volume or less or 65% by volume or more and 85% by volume or less. In a case where the composition and the radio wave absorber contain two or more kinds of resins, the volume content refers to the total volume content of the two or more kinds of resins. The same applies to the volume content related to other components.

### <Additives>

The radio wave absorber obtained by molding the composition and the pellet mixture may optionally contain one or more additives in any proportion or may not contain the additives. Examples of the additive include an antioxidant, a light stabilizer, a dispersing agent, a dispersing aid, a fungicide, an antistatic agent, a plasticizer, an impact improver, a crystal nucleating agent, a lubricant, a surfactant, a pigment, a dye, a filler, a mold release agent (fatty acid, a fatty acid metal salt, an oxyfatty acid, a fatty acid ester, an aliphatic partially saponified ester, paraffin, a low molecular weight polyolefin, a fatty acid amide, an alkylenebis fatty acid amide, an aliphatic ketone, a fatty acid lower alcohol ester, a fatty acid polyhydric alcohol ester, a fatty acid polyglycol ester, a modified silicone, and the like), a processing aid, an antifogging agent, a drip inhibitor, and an antibacterial agent. In the additive, one component may have two or more functions.

The various additives can be added to the composition of the pellet 0 and/or the composition of the pellet 1.

### (Antioxidant)

In one form, examples of the preferred additive include an antioxidant.

The antioxidant is not particularly limited, and a publicly known antioxidant can be used.

Examples of the antioxidant are described in, for example, "Comprehensive Technology for Polymer Stabilization - Mechanism and Application Development -" published by CMC Publishing Co., Ltd., supervised by Yasukazu Okatsu. This description is incorporated in the present specification by reference.

Examples of the kind of the antioxidant include a phenol-based antioxidant, an amine-based antioxidant, a phosphorus-based antioxidant, and a sulfur-based antioxidant.

As the antioxidant, it is preferable to use a phenol-based antioxidant and/or an amine-based antioxidant in combination with a phosphorus-based antioxidant and/or a sulfur-based antioxidant.

Examples of the phenol-based antioxidant include ADEKA STAB AO-20, ADEKA STAB AO-30, ADEKA STAB AO-40, ADEKA STAB AO-50, ADEKA STAB AO-60, ADEKA STAB AO-80, and ADEKA STAB AO-330, manufactured by ADEKA Corporation; and IRGANOX 1010, IRGANOX 1035, IRGANOX 1076, IRGANOX 1098, IRGANOX 1135, IRGANOX 1330, IRGANOX 1726, IRGANOX 245, IRGANOX 259, IRGANOX 3114, and IRGANOX 565, manufactured by BASF Japan Ltd. It is noted that the above "ADEKA STAB" and "IRGANOX" are both registered trade names.

Examples of the amine-based antioxidants include Sanol LS-770, Sanol LS-765, and Sanol LS-2626, manufactured by Mitsubishi-Chemical Foods Corporation; ADEKA STAB LA-77, ADEKA STAB LA-57, ADEKA STAB LA-52, ADEKA STAB LA-62, ADEKA STAB LA-63, ADEKA STAB LA-67, ADEKA STAB LA-68, and ADEKA STAB LA-72, manufactured by ADEKA Corporation; and TINUVIN 123, TINUVIN 144, TINUVIN 622, TINUVIN 765, and TINUVIN 944, manufactured by BASF Japan Ltd. It is noted that the above "ADEKA STAB" and "TINUVIN" are both registered trade names.

In addition, an amine-based compound capable of quenching radicals can also be used as the antioxidant. Examples of such an amine-based compound include polyethylene glycol bis TEMPO [Sigma-Aldrich Co., LLC] and sebacic acid bis TEMPO. It is noted that "TEMPO" is an abbreviation for tetramethylpiperidin-1-oxyl.

Examples of the phosphorus-based antioxidant include ADEKA STAB PEP-8, ADEKA STAB PEP-36, ADEKA STAB HP-10, and ADEKA STAB 2112, manufactured by ADEKA Corporation; and IRGAFOS 168 manufactured by BASF Japan Ltd. It is noted that the above "ADEKA STAB" and "IRGAFOS" are both registered trade names.

Examples of the sulfur-based antioxidant include ADEKA STAB AO-412S and ADEKA STAB AO-503S, manufactured by ADEKA Corporation. It is noted that the above "ADEKA STAB" is a registered trade name.

Among the above, the phenol-based antioxidant is preferably one or more selected from the group consisting of ADEKA STAB AO-20, ADEKA STAB AO-60, ADEKA STAB AO-80, and IRGANOX 1010, the amine-based antioxidant is preferably ADEKA STAB LA-52, the phosphorus-based antioxidant is preferably ADEKA STAB PEP-36, and the sulfur-based antioxidant is preferably ADEKA STAB AO-412S.

In a case where the above-described composition and the above-described pellet mixture contain an antioxidant, the radio wave absorber obtained by molding the above-described composition and the above-described pellet mixture may contain only one kind of antioxidant or may contain two or more kinds of antioxidants.

In a case where the radio wave absorber obtained by molding the composition and the pellet mixture contains an antioxidant, the content of the antioxidant in the composition or the radio wave absorber is not particularly limited, and it is, for example, preferably 0.1 parts by mass to 10 parts by mass and more preferably 0.5 parts by mass to 5 parts by mass with respect to 100 parts by mass of the resin from the viewpoint of both suppressing the decomposition of the resin and suppressing the bleeding of the antioxidant.

### (Light stabilizer)

In one form, examples of the preferred additive include a light stabilizer.

Examples of the light stabilizer include HALS (that is, a hindered amine light stabilizer), an ultraviolet absorbing agent, and a singlet oxygen quencher.

The HALS may be a high molecular weight HALS, a low molecular weight HALS, or a combination of a high molecular weight HALS and a low molecular weight HALS.

In a case where the above-described composition and the above-described pellet mixture contain a light stabilizer, the radio wave absorber obtained by molding the above-described composition and the above-described pellet mixture may contain only one kind of light stabilizer or may contain two or more kinds of light stabilizers.

### HALS having high molecular weight

In the present invention and the present specification, the term "high molecular weight HALS" means a hindered amine light stabilizer having a weight-average molecular weight of more than 1,000.

Examples of the high molecular weight HALS include, as an oligomer-type HALS, poly [6-(1,1,3,3-tetramethylbutyl)imino-1,3,5-triazine-2,4-diyl] [(2,2,6,6-tetramethyl-4-piperidyl)imino]hexamethylene [(2,2,6,6-tetramethyl-4-piperidyl)imino] and dimethyl succinate-1-(2-hydroxyethyl)-4-hydroxy-2,2,6,6-tetramethylpiperidine polycondensate.

Examples of the commercially available high molecular weight HALS product include CHIMASSORB 944LD and TINUVIN 622LD, manufactured by BASF Japan Ltd. It is noted that the above "CHIMASSORB" and "TINUVIN" are both registered trade names.

The weight-average molecular weight (Mw) in the present invention and the present specification is a value measured according to gel permeation chromatography (GPC). In the measurement using the gel permeation chromatography (GPC), HLC (registered trade name) -8220GPC [manufactured by Tosoh Corporation] can be used as the measurement device, TSKgel (registered trade name) Super HZM-M [4.6 mm ID ×15 cm, manufactured by Tosoh Corporation], Super HZ4,000 [4.6 mm ID x 15 cm, manufactured by Tosoh Corporation], Super HZ3,000 [4.6 mm ID x 15 cm, manufactured by Tosoh Corporation], and Super HZ2,000 [4.6 mm ID x 15 cm, manufactured by Tosoh Corporation] are connected one by one, respectively, in series and can be used as the column, and tetrahydrofuran (THF) can be used as the eluent.

The measurement conditions can be a sample concentration of 0.2% by mass, a flow rate of 0.35 mL/min, a sample injection amount of 10 µL, and a measurement temperature of 40°C, and a differential refractive index (RI) detector can be used as the detector.

The calibration curve can be created using "Standard sample TSK standard, polystyrene", "F-40", "F-20", "F-4", "F-1", "A-5000", "A-2500", and "A-1000", manufactured by Tosoh Corporation.

In a case where the radio wave absorber obtained by molding the above-described composition and the above-described pellet mixture contains a high molecular weight HALS, the content of the high molecular weight HALS in the composition and the radio wave absorber is not particularly limited, and it is, for example, preferably 0.2% by mass to 10% by mass with respect to the total mass of the composition and the radio wave absorber.

The content of the high molecular weight HALS in the above radio wave absorber is preferably made to be 0.2% by mass or more with respect to the total mass of the radio wave absorber from the viewpoint of improving weather fastness.

In a case where the content of the high molecular weight HALS in the radio wave absorber is 10% by mass or less with respect to the total mass of the radio wave absorber, the decrease in mechanical strength and the occurrence of blooming tend to be capable of being suppressed.

### HALS having low molecular weight

In the present invention and the present specification, the term "low molecular weight HALS" means a hindered amine light stabilizer having a molecular weight of 1,000 or less (preferably 900 or less and more preferably 600 to 900).

Examples of the low molecular weight HALS include tris(2,2,6,6-tetramethyl-4-piperidyl)benzene-1,3,5-tricarboxylate, tris(2,2,6,6-tetramethyl-4-piperidyl)-2-acetoxypropane-1,2,3-tricarboxylate, tris(2,2,6,6-tetramethyl-4-piperidyl)-2-hydroxypropane-1,2,3-tricarboxylate, tris(2,2,6,6-tetramethyl-4-piperidyl)triazine-2,4,6-tricarboxylate, tris(2,2,6,6-tetramethyl-4-piperidyl)butane-1,2,3-tricarboxylate, tetrakis(2,2,6,6-tetramethyl-4-piperidyl)propane-1,1,2,3-tetracarboxylate, tetrakis(2,2,6,6-tetramethyl-4-piperidyl) 1,2,3,4-butanetetracarboxylate, tetrakis(1,2,2,6,6-pentamethyl-4-piperidyl) 1,2,3,4-butanetetracarboxylate, and 2-(3,5-di-t-butyl-4-hydroxybenzyl)-2-n-butylmalonate bis(1,2,2,6,6-pentamethyl-4-piperidyl). Examples of the commercially available low molecular weight HALS product include ADEKA STAB LA-57, and ADEKA STAB LA-52, manufactured by ADEKA Corporation; and TINUVIN 144 manufactured by BASF Japan Ltd. It is noted that the above "ADEKA STAB" and "TINUVIN" are both registered trade names.

In a case where the radio wave absorber obtained by molding the above-described composition and the above-described pellet mixture contains a low molecular weight HALS, the content of the low molecular weight HALS in the composition and the radio wave absorber is not particularly limited, and it is, for example, preferably 0.2% by mass to 10% by mass with respect to the total mass of the composition and the radio wave absorber.

The content of the low molecular weight HALS in the above radio wave absorber is preferably made to be 0.2% by mass or more with respect to the total mass of the radio wave absorber from the viewpoint of improving weather fastness.

In a case where the content of the low molecular weight HALS in the radio wave absorber is 10% by mass or less with respect to the total mass of the radio wave absorber, the decrease in mechanical strength and the occurrence of blooming tend to be capable of being suppressed.

### Ultraviolet absorbing agent

Examples of the ultraviolet absorbing agent include benzotriazole-based ultraviolet absorbing agents such as 2-(2'-hydroxy-3',5'-di-t-butylphenyl)benzotriazole, 2-(3,5-di-t-amyl-2-hydroxyphenyl)benzotriazole, 2-(2'-hydroxy-5'-methyl-phenyl)benzotriazole, 2-(2'-hydroxy-5'-t-octylphenyl)benzotriazole, 2-(2'-hydroxy-3',5'-di-t-amylphenyl)benzotriazole, 2-[2'-hydroxy-3'-(3",4",5",6"-tetrahydro-phthalimidemethyl)-5'-methylphenyl]benzotriazole, 2,2'-methylenebis[4-(1,1,3,3-tetramethylbutyl)-6-(2H-benzotriazole-2-yl)phenol], 2-[2-hydroxy-3,5-bis(α,α-dimethylbenzyl)phenyl]-2H-benzotriazole, 2-(2-hydroxy-4-octyloxyphenyl)-2H-benzotriazole, and 2-(2H-benzotriazole-2-yl)-4-methyl-6-(3,4,5,6-tetrahydrophthalimidylmethyl)phenol; benzophenone-based ultraviolet absorbing agents such as 2-hydroxy-4-methoxybenzophenone, 2,4-dihydroxybenzophenone, 2,2'-dihydroxy-4-methoxybenzophenone, 2,2'-dihydroxy-4,4'-dimethoxybenzophenone, 2-hydroxy-4-n-octoxybenzophenone, 2,2',4,4'-tetrahydroxybenzophenone, 4-dodecyloxy-2-hydroxybenzophenone, a 3,5-di-t-butyl-4-hydroxybenzoylbenzo acid n-headecyl ester, 1,4-bis(4-benzoyl-3-hydroxyphenoxy)butane, 1,6-bis(4-benzoyl-3-hydroxyphenoxy)hexane; and cyanoacrylate-based ultraviolet absorbing agents represented by ethyl-2-cyano-3,3-diphenylacrylate.

Examples of the commercially available ultraviolet absorbing agent include TINUVIN 320, TINUVIN 328, TINUVIN 234, TINUVIN 1577, TINUVIN 622, and IRGANOX series, manufactured by BASF Japan Ltd.; ADEKA STAB LA31 manufactured by ADEKA Corporation; and SEESORB 102, SEESORB 103, and SEESORB 501, manufactured by SHIPRO KASEI KAISHA, Ltd. It is noted that the "TINUVIN", "IRGANOX", "ADEKA STAB", and "SEESORB" are all registered trade names.

In a case where the radio wave absorber obtained by molding the above-described composition and the above-described pellet mixture contains an ultraviolet absorbing agent, the content of the ultraviolet absorbing agent in the composition and the radio wave absorber is not particularly limited, and it is, for example, preferably 0.2% by mass to 10% by mass with respect to the total mass of the composition and the radio wave absorber.

The content of the ultraviolet absorbing agent in the above radio wave absorber is preferably set to 0.2% by mass or more with respect to the total mass of the radio wave absorber from the viewpoint of improving weather fastness.

In a case where the content of the ultraviolet absorbing agent in the radio wave absorber is 10% by mass or less with respect to the total mass of the radio wave absorber, the decrease in mechanical strength and the occurrence of blooming tend to be capable of being suppressed.

### - Singlet oxygen quencher -

In a case where the radio wave absorber obtained by molding the above-described composition and the above-described pellet mixture contains singlet oxygen quenchers, the content of the singlet oxygen quencher in the composition and the radio wave absorber is not particularly limited; however, it is, for example, preferably 0.2% by mass to 10% by mass with respect to the total mass of the composition and the radio wave absorber.

The content of the singlet oxygen quencher in the above radio wave absorber is preferably made to be 0.2% by mass or more with respect to the total mass of the radio wave absorber from the viewpoint of improving weather fastness.

In a case where the content of the singlet oxygen quencher in the radio wave absorber is 10% by mass or less with respect to the total mass of the radio wave absorber, the decrease in mechanical strength and the occurrence of blooming tend to be capable of being suppressed.

The composition may contain or may not contain a solvent. In a case where the composition contains a solvent, the solvent is not particularly limited, and examples thereof include water, an organic solvent, and a mixed solvent of water and an organic solvent.

Examples of the organic solvent include alcohols such as methanol, ethanol, n-propanol, i-propanol, and methoxypropanol, ketones such as acetone, methyl ethyl ketone, and cyclohexanone, tetrahydrofuran, acetonitrile, ethyl acetate, and toluene. Among these, the solvent is preferably ketones and more preferably cyclohexanone from the viewpoint of drying rate. In a case where the composition contains a solvent, the content of the solvent in the composition is not particularly limited and may be appropriately determined.

A method for producing pellets (a pellet 0 and a pellet 1) from the composition is not particularly limited. For example, a composition containing the above-described various components is kneaded while being heated to obtain a kneaded material, and then it is possible to cut the kneaded material to obtain pellets. A commercially available pelletizer or a pelletizer having a known configuration can be used for cutting the kneaded material. Alternatively, for example, as the pellet 0 which is a pellet of a composition containing at least a resin, a commercially available resin pellet can also be used.

The mixing ratio between the pellet 0 and the pellet 1 in the pellet mixture is not particularly limited. For example, the pellet 0 and the pellet 1 can be mixed with each other to prepare a pellet mixture such that the volume content of the particles in the radio wave absorber to be molded is a desired value, based on the volume content of the particles of each pellet. As an example, in terms of volume, the content of the pellet 1 can be, for example, 10 parts by volume or more and 90 parts by volume or less with respect to 100 parts by volume of the total amount of the pellet 0 and the pellet 1 in the pellet mixture.

The pellet mixture can be prepared by mixing the pellet 0 and the pellet 1. In addition, the pellet mixture may be distributed on the market in the form of a pellet mixture in which the pellet 0 and the pellet 1 are mixed, or the pellet 0 and the pellet 1 may be separately packaged and distributed on the market, and then mixed in a case of being used for molding a molded product to form a pellet mixture. In any of the forms, the mixing of the pellet 0 and the pellet 1 can be carried out by a known method such as a so-called drive blending method.

### [Radio wave absorber and method for producing radio wave absorber]

One aspect of the present invention relates to a radio wave absorber which is a molded product obtained by molding the pellet mixture.

In addition, one aspect of the present invention relates to a method for producing a radio wave absorber, including molding the pellet mixture into a molded product.

A molding method for molding a molded product from a pellet is known. For example, the pellet mixture can be molded into a molded product by a known molding method such as injection molding or extrusion molding.

An example of the injection molding method will be described below. However, the present invention is not limited to the examples described below.

Fig. 2 is a schematic configuration diagram of an injection molding machine. An injection molding machine 1 shown in Fig. 2 comprises a heating cylinder 3 having a nozzle 2 at a distal end thereof, and an injection screw 4 is disposed in the heating cylinder 3. A heater 5 is attached to an outer periphery of the heating cylinder 3, and a hopper 6 that supplies pellets 7 to the injection screw 4 is attached to the facing end portion of the nozzle 2. At the facing end portion of the nozzle 2, a servo motor-cylinder set 9 that rotates the screw 4 and moves the screw 4 in the axial direction (the left-right direction in Fig. 2) at a set value of the motor to perform the injection operation, and a load cell 8 for detecting the injection pressure are disposed at a rear end of the injection screw 4. In addition, a distal end of the nozzle 2 is connected to gates 13 of a fixed mold 11 and a movable mold 12 that form a cavity 10 inside.

For example, in a case where the pellet mixture is charged as the pellet 7 into the injection molding machine shown in Fig. 2 from the hopper 6, it is considered that the pellet 0 and the pellet 1 can be supplied to the injection screw 4 without a large shift in timing at which the pellet 0 and the pellet 1 fall from the hopper 6 to the injection screw 4. The pellets 7 charged from the hopper 6 are subjected to a plasticization operation including a transfer, compression, kneading, melting, and weighing operation of the resin by the rotating injection screw 4 and the heater 5. Then, while the movement speed is controlled by the servo motor-cylinder set 9, the molten material around the injection screw 4 is moved in the direction of the nozzle 2, the cavity 10 is filled with the molten material ejected from the nozzle 2 at a constant speed, and the molded product is molded by being cooled while being held at a set pressure holding force for a predetermined time.

The shape of the radio wave absorber, which is a molded product obtained by molding the pellet mixture, is not particularly limited, and can be any shape such as a plate shape or a linear shape. The "plate shape" includes a sheet shape and a film shape. The plate-shaped radio wave absorber can also be called a radio wave absorbing plate, a radio wave absorbing sheet, a radio wave absorbing film, or the like. The radio wave absorber may be a radio wave absorber having a single formulation (for example, a single-layer radio wave absorbing plate) or a combination of two or more portions having different formulations (for example, a laminate). In addition, the radio wave absorber may have a planar shape, may have a three-dimensional shape, or may be a combination of a portion having a planar shape and a portion having a three-dimensional shape. Examples of the planar shape include a sheet shape and a film shape. Examples of the three-dimensional shape include a tubular shape (a cylindrical shape, rectangular tubular shape, or the like), a horn shape, and a box shape (for example, at least one of the surfaces thereof is open).

For example, the thickness of the radio wave absorber is preferably 20 mm or less, more preferably 10 mm or less, and still more preferably 5 mm or less, from the viewpoint of easiness of handling. From the viewpoint of mechanical properties, the thickness is preferably 1 mm or more and more preferably 2 mm or more. In a case where the thickness of the radio wave absorber is adjusted, for example, the transmission attenuation characteristics can be adjusted. It is noted that in a case where the radio wave absorber is a laminate, the thickness means the total thickness of the radio wave absorber constituting the laminate. The thickness of the radio wave absorber is a value measured using a digital length measuring machine and, specifically, is an arithmetic mean of the measured values measured at nine locations which are randomly selected.

The radio wave absorber can be incorporated into various articles to which radio wave absorbability is desired to be imparted. For example, the plate-shaped radio wave absorber can be incorporated into an article in any form as it is or by being bent at any portion. In addition, the pellet mixture can also be molded into a desired shape by injection molding or the like and incorporated into an article.

By the way, the on-vehicle radar, which has been attracting attention in recent years, is a radar that uses radio waves in the millimeter wave frequency band. The millimeter wave is an electromagnetic wave having a frequency of 30.0 GHz to 300.0 GHz. The radio wave absorber is suitable, for example, as a radio wave absorber that is incorporated on a front side (an incident side of the radio wave incident from the outside) of the radio wave transmitting and receiving unit in the on-vehicle radar in order to reduce the side lobe of the on-vehicle millimeter-wave radar.

In addition, the radio wave absorber can also be incorporated into a radio wave absorbing article that is used in the field of wireless technology such as a motion sensor. The radio wave absorber is suitable as a radio wave absorber for improving recognition accuracy by removing unnecessary radio waves in wireless equipment such as an internal sensor of a cellular phone and a biological information sensor. Such a radio wave absorber can be suitably used, for example, in a radio wave absorbing article for a band of 55.0 to 66.0 GHz. The radio wave absorbing article is an article having radio wave absorbability to radio waves of one or more frequencies, and in a case where a radio wave absorber is incorporated into the article as at least a part thereof, the above radio wave absorbability can be obtained. The radio wave absorbing article for a band of 55.0 to 66.0 GHz is an article having radio wave absorbability to radio waves of one or more frequencies in a frequency band of 55.0 to 66.0 GHz. Examples of such an article include the various wireless equipment. In a case where the radio wave absorber is incorporated into such a radio wave absorbing article, unnecessary radio waves can be removed, and thus the recognition accuracy can be improved.

In addition, the bandwidth may be wide-banded depending on the kind of radar in which the radio wave absorber is used. For example, a radar for a 60 GHz band may be used in a 7.0 GHz bandwidth in a range of 57.0 to 64.0 GHz. For a use application to a radar having such a wideband bandwidth, a plurality of kinds of particles selected from the group consisting of magnetic particles and dielectric particles can be mixed to prepare a radio wave absorber that can be compatible with bandwidth widening, and/or a plurality of kinds of radio wave absorbers can be also mixed to prepare a radio wave absorber that can be compatible with bandwidth widening.

### [Radio wave absorbing article]

One aspect of the present invention relates to a radio wave absorbing article including the radio wave absorber. Specific examples of the radio wave absorbing article include an on-vehicle radar. Specific examples thereof include wireless equipment such as an internal sensor of a cellular phone and a biological information sensor. In addition, in one form, the radio wave absorbing article can be a radio wave absorbing article in a band of 55.0 GHz to 66.0 GHz. It suffices that the radio wave absorbing article includes the radio wave absorber according to one aspect of the present invention. Other configurations of the radio wave absorbing article are not particularly limited, and a known technique related to the radio wave absorbing article can be applied.

### Examples

Hereinafter, the present invention will be described based on Examples. However, the present invention is not limited to the embodiments shown in Examples. Unless otherwise specified, steps and evaluations described below were carried out in an environment of the ambient air atmosphere. In addition, the steps and evaluations in the following description were carried out at an atmosphere temperature of 23°C ± 1°C, unless otherwise specified.

### [Production of magnetic particles 1]

15.72 g of strontium carbonate [SrCO₃], 81.49 g of α-iron (III) oxide [α-Fe₂O₃], and 15.72 g of aluminum oxide [Al₂O₃] were weighed, charged into a paint shaker together with 500 g of zirconia beads (bead diameter: 0.5 mm) and 300 g of water, and subjected to a mixing treatment in a paint shaker for 3.5 hours to obtain a dispersion liquid.

After the mixing treatment, the dispersion liquid was recovered while separating the zirconia beads.

The recovered dispersion liquid was subjected to centrifugal separation to discard the supernatant liquid, and then dried in a heating furnace having a furnace temperature of 95°C for 12 hours to obtain a raw material mixture.

Next, the obtained raw material mixture was subjected to a pulverization treatment three times to obtain a powder, where the pulverization treatment was carried out for 30 seconds by using a mill (Absolute 3, manufactured by OSAKA CHEMICAL Co., Ltd.) and setting a variable speed dial to "maximum". Strontium chloride (SrCl₂) was dissolved in 100 mL of water to prepare a strontium chloride aqueous solution having a concentration of 10% by mass, which was subsequently added to the obtained powder and subjected to ultrasonic dispersion for 10 minutes. Then, drying was carried out in a heating furnace having a furnace temperature of 95°C for 12 hours, and further, pulverization was carried out with the above-described mill to obtain a pulverized material.

Next, the obtained pulverized material was sintered in a heating furnace having a furnace temperature of 1,250°C for 4 hours, and then the obtained sintered product was subjected to a pulverization treatment three times, where the pulverization treatment was carried out for 30 seconds by using the above mill and setting a variable speed dial to "5". Then, washing was carried out by an ultrasonic treatment until the electric conductivity reached 30 microsiemens (µS) or less, and then drying was carried out in a heating furnace having a furnace temperature of 95°C for 12 hours to obtain a magnetic particle.

Next, the obtained magnetic particle was subjected to an annealing treatment in a heating furnace having a furnace temperature of 1,000°C for 2 hours.

In this way, the magnetic particles 1 were obtained.

### [Checking of crystal structure]

The crystal structure of the magnetic material constituting the above-mentioned magnetic particle 1 was identified by X-ray diffraction analysis. As the measurement device, X'Pert Pro manufactured by PANalytical Co., Ltd., which is a powder X-ray diffractometer, was used. The measurement conditions are shown below.

### - Measurement conditions -

X-ray source: CuKα ray
[Wavelength: 1.54 Å (0.154 nm), output: 40 mA, 45 kV]
Scan range: 20° <20 < 70°
Scan interval: 0.05°
Scan speed: 0.33 °/min

As a result of the X-ray diffraction analysis, it was confirmed that the magnetic particles 1 have a magnetoplumbite-type crystal structure and are a single-phase powder of a magnetoplumbite-type hexagonal ferrite that does not include a crystal structure other than the magnetoplumbite-type crystal structure.

### [Checking of formulation]

The formulation of the magnetic material that constitutes a magnetic particle was checked by the high frequency inductively coupled plasma emission spectroscopy analysis. Specifically, the checking was carried out by the following method.

A container (a beaker) containing 12 mg of the magnetic particles and 10 mL of an aqueous solution of hydrochloric acid of a concentration of 4 mol/L was held on a hot plate at a set temperature of 120°C for 3 hours to obtain a dissolution solution. 30 mL of pure water was added to the obtained dissolution solution, which was then filtered using a membrane filter having a filter pore diameter of 0.1 µm. Elemental analysis of the filtrate obtained as described above was carried out using a high frequency inductively coupled plasma emission spectrometer [ICPS-8100, manufactured by Shimadzu Corporation]. Based on the obtained elemental analysis results, a content of each atom with respect to 100% by atom of the iron atom was obtained. Then, based on the obtained content, the formulation of the magnetic material was checked. As a result, it was confirmed that the formulations of the magnetic particles 1 are formulations in which A in Formula 1 is Sr and x is 1.65.

### [Production of resin pellet A]

A polypropylene resin (NOVATEC PP MA3H, manufactured by Japan Polypropylene Corporation) was kneaded using a biaxial kneader, and then cut using a pelletizer to obtain resin pellets A. The resin pellet A is a resin pellet containing no magnetic particles.

### [Comparative Example 1]

### <Production of magnetic particle-containing resin pellet 1>

A mixture obtained by adding 30% by volume of the magnetic particles 1 to a polypropylene resin (NOVATEC PP MA3H manufactured by Japan Polypropylene Corporation) at a volume fraction was kneaded using a twin-screw kneader, and then cut using a pelletizer to obtain magnetic particle-containing resin pellets 1, with the total amount (volume basis) of the polypropylene resin and the magnetic particles 1 being set to 100% by volume.

### <Preparation of pellet mixture>

The resin pellet A was drive-blended with the magnetic particle-containing resin pellet 1 (volume content of magnetic particles 1: 30% by volume) such that the volume content of the magnetic particles 1 in the pellet mixture was 15% by volume, thereby preparing a pellet mixture. Specifically, the two types of pellets were weighed, placed in a vinyl bag, and mixed by shaking for about 5 minutes. The amount of the mixture (batch) in one time was set to 2 to 3 kg. In the prepared pellet mixture, the content of the magnetic particle-containing resin pellet 1 was 70 parts by volume with respect to 100 parts by volume of the total content of the resin pellet A and the magnetic particle-containing resin pellet 1.

### <Production of injection molded product>

The pellet mixture produced above was charged into an injection molding machine from a hopper of the injection molding machine to perform injection molding, and 20 sheets of A5-sized flat plates (148 mm × 210 mm) having a thickness of 2.5 mm were produced. Hereinafter, details of the injection molding machine will be described.

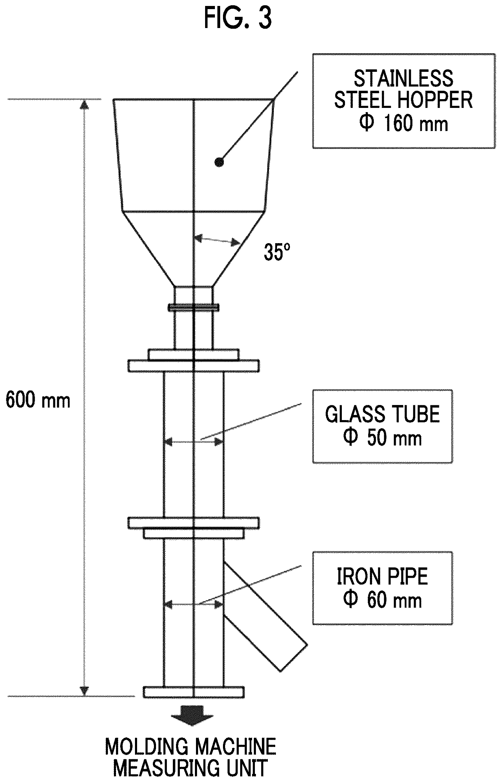

Fig. 3 is a schematic view of a pellet supply unit of an injection molding machine used for producing an injection molded product.

The pellet supply unit shown in Fig. 3 is composed of a stainless steel hopper (diameter: 160 mm, taper angle: 35°, capacity: about 2.5 kg), a glass tube (diameter: 50 mm), and an iron tube (diameter: 60 mm), and has a total length of about 600 mm and a total capacity of about 3.3 kg. In Fig. 3, "Φ" indicates a diameter.

About 3.0 kg of the pellet mixture is put into a hopper of the pellet supply unit. The pellet mixture is naturally dropped by its own weight into a hopper, a glass pipe, and an iron pipe and supplied to a molding machine measuring unit during the measurement after one shot of molding. 20 A5-sized flat plates having a thickness of 2.5 mm were continuously molded at a temperature of 220°C of the pellet mixture and a mold temperature of 60°C.

### [Comparative Example 2]

Magnetic particle-containing resin pellets 2 were produced according to the method described for the production of the magnetic particle-containing resin pellet 1, except that in the production of the magnetic particle-containing resin pellet, the polypropylene resin was changed to 99% by mass of the polypropylene resin and 1% by mass of an olefin-based thermoplastic elastomer (hereinafter, referred to as a "TPO resin", LVG9541S manufactured by RIKEN TECHNOS CORPORATION) with respect to 100% by mass of the total amount of the resin.

A pellet mixture was prepared and an injection molded product was produced according to the method described for Comparative Example 1, except for the above points.

### [Comparative Example 3]

Magnetic particle-containing resin pellets 3 were produced according to the method described for the production of the magnetic particle-containing resin pellet 1, except that in the production of the magnetic particle-containing resin pellet, the polypropylene resin was changed to 98% by mass of the polypropylene resin and 2% by mass of the TPO resin (LVG9541S manufactured by RIKEN TECHNOS CORPORATION) with respect to 100% by mass of the total amount of the resin.

A pellet mixture was prepared and an injection molded product was produced according to the method described for Comparative Example 1, except for the above points.

### [Example 1]

Magnetic particle-containing resin pellets 4 were produced according to the method described for the production of the magnetic particle-containing resin pellet 1, except that in the production of the magnetic particle-containing resin pellet, the polypropylene resin was changed to 97% by mass of the polypropylene resin and 3% by mass of the TPO resin (LVG9541S manufactured by RIKEN TECHNOS CORPORATION) with respect to 100% by mass of the total amount of the resin.

A pellet mixture was prepared and an injection molded product was produced according to the method described for Comparative Example 1, except for the above points.

### [Example 2]

Magnetic particle-containing resin pellets 5 were produced according to the method described for the production of the magnetic particle-containing resin pellet 1, except that in the production of the magnetic particle-containing resin pellet, the polypropylene resin was changed to 95% by mass of the polypropylene resin and 5% by mass of the TPO resin (LVG9541S manufactured by RIKEN TECHNOS CORPORATION) with respect to 100% by mass of the total amount of the resin.

A pellet mixture was prepared and an injection molded product was produced according to the method described for Comparative Example 1, except for the above points.

### [Example 3]

Magnetic particle-containing resin pellets 6 were produced according to the method described for the production of the magnetic particle-containing resin pellet 1, except that in the production of the magnetic particle-containing resin pellet, the polypropylene resin was changed to 90% by mass of the polypropylene resin and 10% by mass of the TPO resin (LVG9541S manufactured by RIKEN TECHNOS CORPORATION) with respect to 100% by mass of the total amount of the resin.

A pellet mixture was prepared and an injection molded product was produced according to the method described for Comparative Example 1, except for the above points.

### [Measurement of friction coefficient]

The friction coefficient of each of the resin pellet A and the magnetic particle-containing resin pellets 1 to 6 was determined by the method described above. A friction coefficient of the composition of the resin pellet A with the metal was defined as µ0, a friction coefficient of the composition of each pellet of the magnetic particle-containing resin pellets 1 to 6 with the metal was defined as µ1, and a friction coefficient ratio (µ0/µ1) was calculated for each of the above-described examples and comparative examples. The calculated values are shown in Table 1.

In the friction coefficient measurement sample (flat plate), the arithmetic mean roughness Ra of the surface in contact with the counterpart material during the measurement of the friction coefficient, which was measured by the following method, was 1.0 µm.

The arithmetic mean roughness Ra is measured in a region of an area of 40 µm × 40 µm on the flat plate surface by an atomic force microscope (AFM). Specifically, a region of 40 µm × 40 µm on the flat plate surface is measured using an AFM (Nanoscope 4 manufactured by Veeco Instruments Inc.) in a tapping mode. RTESP-300 manufactured by BRUKER is used as a probe, a scan speed (probe movement speed) is set to a speed at which one screen (512 pixel × 512 pixel) is measured in 341 seconds. The measurement is performed 5 times at each of three different measurement positions which are randomly selected. From measurement results obtained at the three measurement positions, an arithmetic mean of measured values excluding a minimum value and a maximum value from Ra's obtained by the measurement performed at each measurement position 5 times (that is, three measured values of one measurement position, nine measured values in a total of the three measurement positions) is adopted as Ra of the surface to be measured.

### [Specific gravity]

The specific gravity of each of the resin pellet A and the magnetic particle-containing resin pellets 1 to 6 was determined by the water replacement method described in JIS K 7112-1: 2023. The specific gravity of the resin pellet A was 0.9, and the specific gravity of each of the magnetic particle-containing resin pellets 1 to 6 was 2.1.

### [Measurement of transmittance]

The transmittance (unit: %) of each of the above flat plates was measured by the following method.

As a measuring device, a vector network analyzer (product name: N5225B) manufactured by Keysight Technologies, Inc. and a horn antenna (product name: RH12S23) manufactured by KEYCOM Corporation were used, and using a free space method, S parameters were measured with one plane of each of the above-described flat plates facing the incident side at an incidence angle of 0° and a sweep frequency of 60 GHz to 90 GHz, and S21 of the S parameters at a frequency of 76.5 GHz was defined as a transmittance.

For each of the examples and comparative examples, Table 1 shows the maximum value, the minimum value, the arithmetic mean, and the standard deviation σ of S21 (transmittance) obtained for 20 flat plates.

**[Table 1]**

| | Comparative Example 1 | Comparative Example 2 | Comparative Example 3 | Example 1 | Example 2 | Example 3 |
|---|---|---|---|---|---|---|
| Magnetic particle-containing resin pellet µ1 | 0.35 | 0.39 | 0.42 | 0.45 | 0.51 | 0.62 |
| Resin pellet µ0 | 0.34 | 0.34 | 0.34 | 0.34 | 0.34 | 0.34 |
| µ0/µ1 | 0.97 | 0.87 | 0.81 | 0.76 | 0.67 | 0.55 |
| Arithmetic mean of S21 (transmittance) [%] | 18 | 18 | 18 | 18 | 18 | 18 |
| Minimum value of S21 (transmittance) [%] | 11 | 13 | 14 | 15 | 17 | 17 |
| Maximum value of S21 (transmittance) [%] | 28 | 22 | 20 | 19 | 19 | 19 |
| S21 σ [%] | 4.5 | 3.2 | 2.4 | 1.4 | 0.7 | 0.5 |

From the results shown in Table 1, it can be confirmed that in 20 flat plates (radio wave absorbers) molded using the pellet mixtures of Examples 1 to 3, the value of σ is small, that is, the variation in transmittance is small as compared with 20 flat plates molded using each pellet mixture of Comparative Examples 1 to 3.

### Industrial Applicability

One aspect of the present invention is useful in the technical field of carrying out various automatic driving controls such as automatic driving control of an automobile, and the wireless technical field such as a motion sensor field.

## Claims

1. A pellet mixture comprising:
a pellet 0 which is a pellet of a composition containing at least a resin; and
a pellet 1 which is a pellet of a composition containing one or more kinds of particles selected from the group consisting of magnetic particles and dielectric particles, and a resin, in which a volume content of the particles is higher than a volume content of the particles in the composition of the pellet 0,
wherein a friction coefficient of the composition of the pellet 0 with a metal is defined as µ0, a friction coefficient of the composition of the pellet 1 with the metal is defined as µ1, and a friction coefficient ratio µ0/µ1 is 0.80 or less.

2. The pellet mixture according to claim 1,
wherein the friction coefficient ratio µ0/µ1 is 0.50 or more and 0.80 or less.

3. The pellet mixture according to claim 1,
wherein the particles are magnetic particles, and
the magnetic particles are particles of a hexagonal ferrite.

4. The pellet mixture according to claim 3,
wherein the hexagonal ferrite is a substitution-type hexagonal ferrite.

5. The pellet mixture according to claim 4,
wherein the substitution-type hexagonal ferrite is a magnetoplumbite-type hexagonal ferrite having a formulation represented by Formula 1,
in Formula 1, A represents one or more kinds of atoms selected from the group consisting of Sr, Ba, Ca, and Pb, and x satisfies 0.50 ≤ x ≤ 8.00.
FORMULA 1 AFe₍₁₂₋ₓ₎AlₓO₁₉

6. The pellet mixture according to claim 5,
wherein an atom represented by A in Formula 1 includes Sr.

7. The pellet mixture according to claim 1,
wherein the friction coefficient ratio µ0/µ1 is 0.50 or more and 0.80 or less,
the magnetic particles are particles of a hexagonal ferrite,
the hexagonal ferrite is a substitution-type hexagonal ferrite, and
the substitution-type hexagonal ferrite is a magnetoplumbite-type hexagonal ferrite having a formulation represented by Formula 1,
in Formula 1, A represents one or more kinds of atoms selected from the group consisting of Sr, Ba, Ca, and Pb, an atom represented by A includes Sr, and x satisfies 0.50 ≤ x ≤ 8.00.
FORMULA 1 AFe₍₁₂₋ₓ₎AlₓO₁₉

8. A radio wave absorber which is a molded product obtained by molding the pellet mixture according to any one of claims 1 to 7.

9. A radio wave absorbing article comprising:
the radio wave absorber according to claim 8.

10. A method for producing a radio wave absorber, comprising:
molding of the pellet mixture according to any one of claims 1 to 7 into a molded product.

11. The method for producing a radio wave absorber according to claim 10,
wherein the molding is injection molding.
